(19) Europäisches Patentamt
European Patent Office
Office européen des brevets

(11) **EP 3 388 288 B1**

(12) **EUROPEAN PATENT SPECIFICATION**

(45) Date of publication and mention
of the grant of the patent:
**19.02.2020 Bulletin 2020/08**

(51) Int Cl.:
**B60R 7/06** *(2006.01)*        **F16F 3/04** *(2006.01)*

(21) Application number: **17166672.0**

(22) Date of filing: **13.04.2017**

(54) **GLOVE BOX OF A DASHBOARD OF A MOTOR VEHICLE**

HANDSCHUHFACH EINES ARMATURENBRETTS EINES KRAFTFAHRZEUGS

BOÎTE À GANTS POUR LE TABLEAU DE BORD D'UN VÉHICULE À MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.10.2018 Bulletin 2018/42**

(73) Proprietor: **FCA Italy S.p.A.**
**10135 Torino (IT)**

(72) Inventors:
• **BERTOLO, Andrea**
**10135 Torino (IT)**
• **CIPRIANI, Francesco**
**10135 Torino (IT)**

(74) Representative: **Lovino, Paolo et al**
**Studio Torta S.p.A.**
**Via Viotti, 9**
**10121 Torino (IT)**

(56) References cited:
**FR-A1- 2 764 255        JP-A- 2001 146 914
JP-A- 2001 193 779        JP-U- S5 562 447
KR-B1- 100 901 596      US-A- 5 220 706**

**Description**

The present invention relates to a glove box of a dashboard (also called "control panel") of a motor vehicle, according to the preamble of claim 1, as disclosed e.g. in JP 2001 193779 A. As already known, various types of glove boxes are currently in use.

A first type of glove box comprises a container mounted on the dashboard of the motor vehicle, said container being closed by a door that is hinged thereto, provided with elastically deformable means for damping the opening of the door.

A second type of glove box, on the other hand, provides the use of an inner shell inserted in a container mounted on the dashboard. In such a case, a wall of the shell acts also as container door. This second type also provides the use of elastically deformable means for damping the opening of the shell/door assembly.

One of the drawbacks of the current glove boxes, especially in the second type case, is that the elastically deformable means, mechanically coupled to a device for opening/closing the glove box, do not allow a gradual opening of the opening/closing device.

These drawbacks are particularly significant in the second type, especially when some objects are arranged in the tilting shell. In fact, when opening the shell (a portion of which also acts as a cavity closing element), the objects in the box increase the torque acting on the shell, and especially at the end of the opening step, cause a troublesome opening acceleration that results in an increased operating noise and possible undesired exit of objects from the box.

Therefore, a main object of the present invention is to provide a glove box that allows overcoming the aforesaid drawbacks.

The present invention provides a glove box of a dashboard of a motor vehicle according to the independent claim 1 or to any of the claims dependent, directly or indirectly, on claim 1.

For a better understanding of the present invention, some embodiments will now be described purely by way of nonlimiting examples and with reference to the accompanying drawings, in which:

- Figure 1 shows a perspective view of a first embodiment of a glove box according to the teaching of the present invention; the glove box is in its open configuration;
- Figure 2 shows a perspective view of the same embodiment of Figure 1 in which, however, the glove box is in its closed configuration;
- Figure 3 shows a perspective view of a second embodiment of a glove box not part of the present invention; the glove box is in its open configuration;
- Figure 4 shows a perspective view of some details of the first embodiment (Figures 1, 2) when the glove box is in its open configuration (Figure 1); and

- Figure 5 shows a perspective view of some details of the first embodiment (Figures 1, 2) when the glove box is in its closed configuration (Figure 2).

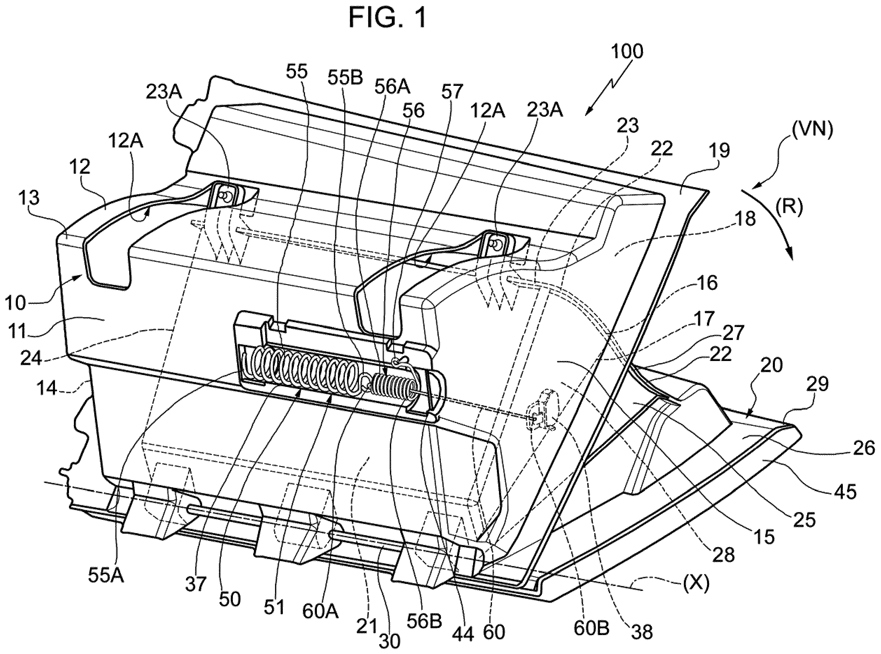

In Figure 1, 100 indicates as a whole a glove box of a dashboard of a motor vehicle made according to the teaching of the present invention.

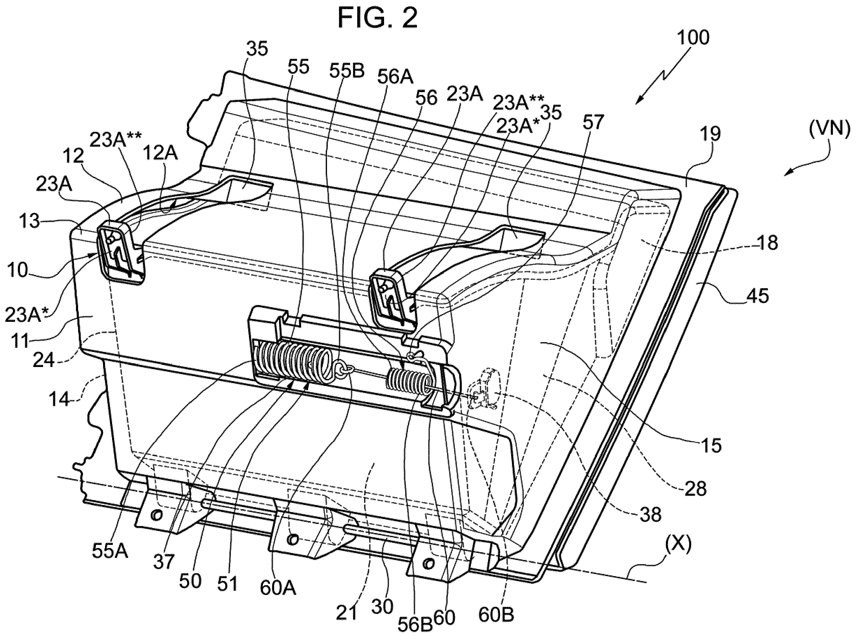

As previously stated, Figures 1, 2 show a first possible embodiment of the invention.

The glove box 100 comprises a container 10, which can be fitted with known and not shown means, in a dashboard (control panel) of a motor vehicle.

In the embodiment shown in Figures 1 and 2, the container 10 is shaped like a hollow pentahedron.

In more detail, the container 10 (if viewed from the traveller's side) comprises:

- a first bottom face 11;
- a second bottom face 12, coupled to the first bottom face 11 by means of an edge 13;
- a first side face 14;
- a second side face 15; and
- a front face 16 housing an opening 17, which provides access to a cavity 18 whose purpose will be explained more clearly hereinafter.

Three sides of the opening 17 are provided with a peripheral edge 19, which in use rests on the dashboard (not shown) of the motor vehicle and is fastened thereto by known and not shown means.

The glove box 100 also comprises an inner shell 20 inserted in said container 10.

As shown in Figures 1 and 2, the inner shell 20, also shaped as a hollow pentahedron, is coupled to the container 10 by a hinge 30 having an axis (X).

The inner shell 20 substantially follows the shape of the container 10, thus comprising:

- a first bottom face 21;
- a second bottom face 22 coupled to the first bottom face 21 by means of an edge 23; on the second bottom face 22 there is an opening 27, which provides access to a cavity 28;
- a first side face 24;
- a second side face 25; and
- a front face 26 closed by a door 45 provided with a peripheral edge 29, which, when the glove box 100 is in the closed configuration (Figure 2), abuts on said peripheral edge 19 of the container 10.

In other words, in the closed configuration of Figure 2, the door 45, supported by the inner shell 20, closes the cavity 18 made in the container 10.

The whole of the two cavities 18 and 28 constitutes a glove cavity (VN) (Figure 1) housing objects of various kinds such as, for example, the motor vehicle registration papers, a deodorant, paper handkerchiefs, sweets etc.

As shown in Figures 1, 2, the second bottom face 12 of the container 10 has two identical and parallel grooves 12A.

Each groove 12A extends perpendicularly with regard to the axis (X) starting from the edge 13 of the container 10 and parallel to the side faces 14, 24 and, respectively, to the side faces 15, 25.

Each groove 12a is a guide for a respective runner 23a integral with the edge 23 of the inner shell 20.

Therefore, when the glove box 100 is closed (Figure 2) an outer face 23A* of the runner 23a lies on the first bottom face 11 of the container 10, whereas, when the glove box 100 is open (Figure 1) an inner face 23A** of the runner 23A rests on an abutment 35 (Figure 2), which is arranged on the second bottom face 12 of the container 10.

The first bottom face 11 of the container 10 is provided with a seat 37 housing at least a portion of an elastic energy-accumulating device 50.

The seat 37 extends in a direction parallel to the direction of the axis (X) and of the edges 13, 23.

In the case shown in Figures 1 and 2, the elastic energy-accumulating device 50 comprises an elastic assembly 51 and a cable 60.

The elastic assembly 51 is mechanically coupled, through the cable 60, to the wall 25 of the inner shell 20.

In the embodiment shown in Figures 1, 2, 4, 5 the elastic assembly 51 comprises a first spring 55 and a second spring 56, arranged in series.

In such a case, the first spring 55 is longer than the second spring 56, and has coils having a diameter larger than the one of the coils of the second spring 56.

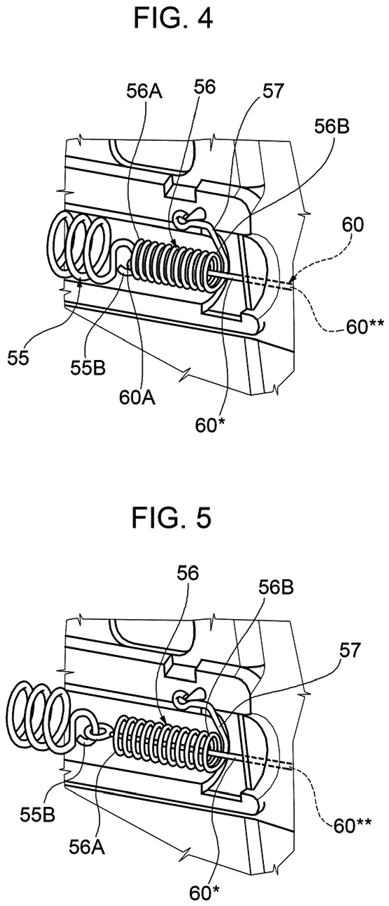

The first spring 55, in turn, comprises a first end 55A fastened to the bottom wall of the seat 37 and a second end 55b to which a first end 60a of the cable 60 is fastened. A first portion 60* of the cable 60 extends at least partially freely in the second spring 56 (Figures 4, 5).

On the other hand, a second end 60b of the cable 60 is fastened to the wall 25 of the inner shell 20 by means of a retainer 38.

With regard to the second spring 56, in the particular embodiment of Figures 1, 2, 4, 5, a first end 56a is free, while a second end 56b rests on a C-shaped metal element 57. The metal element 57 is fastened with known means to the first bottom face 11 of the container 10.

The first portion 60* of cable 60 (Figures 4, 5) extends parallel to the axis (X) (at least partially freely in the second spring 56), whereas, after a deviation of 90° at an edge 44 of the inner shell 20, a second portion 60** is housed between the second side face 15 of the container 10 and the second side face 25 of the inner shell 25.

The second portion 60** of the cable 60 lies in a plane perpendicular to the axis (X).

The elastic energy-accumulating device 50 is elastically loaded in the passage from the closed configuration of Figure 2 to the open configuration of Figure 1.

Furthermore, the elastic energy-accumulating device 50 can generate a damping action when the door 45 opens said opening 17.

In actual use, if the initial condition of the glove box 100 is the one shown in Figure 2, i.e. if the door 45 closes the opening 17, the configuration of the elastic assembly 51 is the one shown in Figure 5.

However, when a user (not shown) opens the glove box 100 by rotating the door 45 (and therefore also the inner shell 20) around the axis (X) (hinge 30) according to the arrow (R), the second end 55b of the first spring 55 rests on the first end 56a of the second spring 56.

However, as the door 45 opens, the cable 60 increasingly pulls the second end 55b so that the first spring 55 starts compressing the second spring 56 thus deforming it, as shown in Figure 4. The second spring 56 is compressed between the second end of the first spring 55B and the C-shaped metal element 57.

In other words, the action on the second spring 56 adds, in a planned way and in the last portion of the rotation of the door 45, to the action on the first spring 55, thus preventing a sudden opening of the door 45.

The elastic assembly 51 (belonging to the elastic energy-accumulating device 50) is regarded as an elastic system having a Young's modulus of elasticity variable according to the deformation of the two springs 55, 56.

As already known, in the field of the mechanics of materials, Hooke's law is formulated that the elongation undergone by an elastic body is directly proportional to the force applied thereto; the constant of proportionality is said the elastic constant and depends on the nature of the material.

The modern representation of the Hooke's law refers to the concepts of tension $\sigma$ and deformation $\varepsilon$ and is provided, in the one-dimensional case, by the relationship:

$$\sigma = E\ \varepsilon$$

where E is Young's modulus of elasticity.

Therefore, in other words, the elastic assembly 51 of the elastic energy-accumulating device 50 can be considered as an elastic system having a Young's modulus of elasticity variable according to the deformation of the two springs 55, 56.

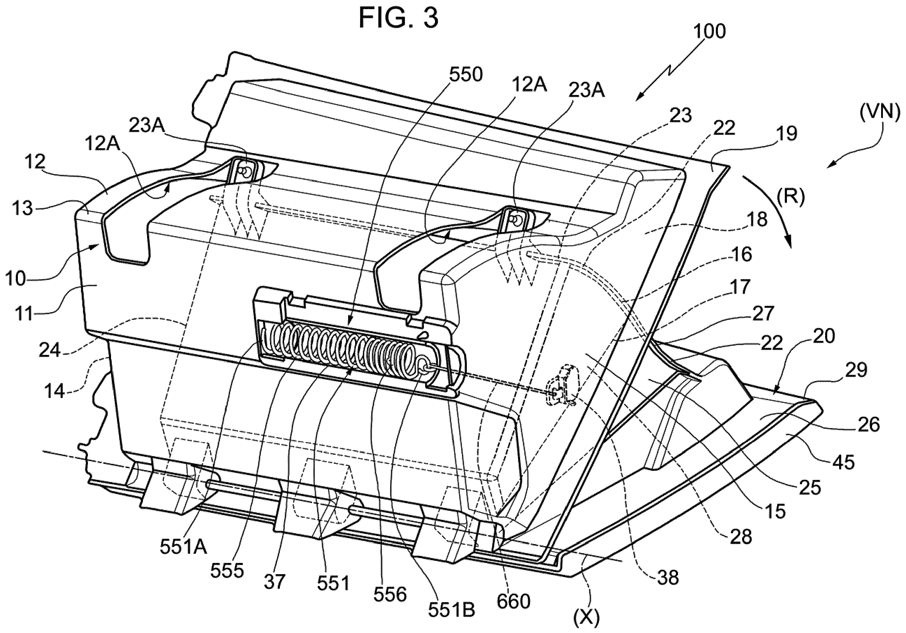

According to a further embodiment (not part of the present invention) shown in Figure 3, where corresponding elements have the same numbers and references of Figures 1, 2, 4, 5, the elastic energy-accumulating device 550 comprises a single elastic assembly 551, in turn comprising two elastic portions 555, 556, both spring-shaped and arranged in series.

The spring assembly 551 includes a first end 551A fastened to the bottom wall of the seat 37, and a second end 551b to which the pulling cable 660 is fastened.

As shown in Figure 3, the elastic portion 556 differs from the elastic portion 555 for number of coils, diameter of the coil and, possibly, material, so that the two elastic portions 555, 556 have a different elastic behaviour and, ultimately, a Young's modulus of elasticity with different values.

Its operation is similar to the one described with regard to the first embodiment of Figures 1, 2, 4, 5.

It is obvious that the person skilled in the art may make to the elastic energy-accumulating device, and in particular to its elastic assembly, any changes that can make the system more suitable to solve the previously identified technical problem. In particular, the choice of the materials of the two elastic portions has a particular relevance because, as already known, Young's modulus of elasticity considerably varies according to the material of the elastic system.

It is also obvious for the person skilled in the art that the elastic assembly can be formed by more than two elastic portions without departing from the scope of the invention. The main advantage of the glove box described above is that the elastically deformable means, mechanically coupled to a device for opening/closing the glove box, allow a gradual opening of the opening/closing device.

## Claims

1. Glove box (100) for a dashboard of a motor vehicle; glove box (100) comprising:

   a container (10) mountable on the dashboard of the motor vehicle; said container (10) being provided with an opening (17) for loading/unloading the objects;
   covering means (45) of said opening (17); said covering means (45) being hinged to said container (10) by hinge means (30); and
   elastic energy-accumulating means (50; 550) mechanically coupled to said covering means (45);
   said elastic energy-accumulating means (50) being elastically loaded due to the movement of said covering means (45) when opening said opening (17);
   said elastic energy-accumulating means (50) comprising an elastic assembly (51) having a Young's modulus of elasticity variable according to the deformation of said elastic assembly (51); said elastic assembly (51) comprising a first spring (55) and a second spring (56); said first spring (55) comprising a first end (55A) fastened to a wall and a second end (55B) to which a first end (60A) of pulling means (60) is fastened; a first portion (60*) of said pulling means (60) extending at least partially freely in said second spring (56); a second end (60B) of said pulling means (60) being fastened to said covering means (45); said second spring (56) comprising a first free end (56A) and a second end (56B) resting on an abutment element (57);
   **characterized in that**, when a user opens the glove box (100) by rotating the covering means (45) about the hinge means (30), said first spring (55) is elongated by said pulling means (60) and the second end (55b) of said first spring (55) comes to rest on the first end (56a) of said second spring (56), so that the first and second springs (55,56) become in series; as the covering means (45) opens further, the pulling means (60) increasingly pulls the second end (55b) of said first spring (55), so that said first spring (55) starts compressing said second spring (56), thus deforming it.

2. Glove box (100) according to claim 1, **characterized in that** said first spring (55) is longer than said second spring (56) and has coils having a diameter larger than the coils of said second spring (56).

3. Glove box (100) according to any one of the preceding claims, **characterized in that** at least a portion of said elastic energy-accumulating means (50) is contained in a seat (37) formed on a face (11) of said container (10) .

4. Glove box (100) according to any one of the preceding claims, **characterized in that** inside said container (10) there is a shell (20) hinged to said container (10) by means of said hinge means (30); said shell (20) comprising said covering means (45).

## Patentansprüche

1. Handschuhfach (100) für ein Armaturenbrett eines Kraftfahrzeugs;
   wobei das Handschuhfach (100) umfasst:

   einen Behälter (10), der an das Armaturenbrett des Kraftfahrzeugs montiert werden kann; wobei der Behälter (10) mit einer Öffnung (17) zum Beladen/Entladen der Gegenstände versehen ist;
   ein Abdeckungsmittel (45) der Öffnung (17); wobei das Abdeckungsmittel (45) durch Scharniermittel (30) an den Behälter (10) gelenkig gelagert ist; und
   ein elastisches Energiespeichermittel (50; 550), das mechanisch mit dem Abdeckungsmittel (45) verbunden ist;
   wobei das elastische Energiespeichermittel (50) aufgrund der Bewegung des Abdeckungsmittels (45) beim Öffnen der Öffnung (17) elastisch vorgespannt ist;

wobei das elastische Energiespeichermittel (50) eine elastische Anordnung (51) umfasst, die ein Youngscher Modul einer Elastizitätsvariable gemäß der Verformung der elastischen Anordnung (51) aufweist; wobei die elastische Anordnung (51) eine erste Feder (55) und eine zweite Feder (56) umfasst; wobei die erste Feder (55) ein erstes Ende (55A), das an einer Wand befestigt ist, und ein zweites Ende (55B), an welches ein erstes Ende (60A) eines Zugmittels (60) befestigt ist, umfasst; wobei ein erster Abschnitt (60*) des Zugmittels (60) sich mindestens teilweise frei in die zweite Feder (56) erstreckt; ein zweites Ende (60B) des Zugmittels (60) an dem Abdeckungsmittel (45) befestigt ist; die zweite Feder (56) ein erstes freies Ende (56A) und ein zweites Ende (56B), das auf einem Anschlagelement (57) liegt, umfasst; **dadurch gekennzeichnet, dass**, wenn ein Benutzer das Handschuhfach (100) durch Drehen des Abdeckungsmittels (45) um das Scharniermittel (30) öffnet, die erste Feder (55) durch das Zugmittel (60) gestreckt wird und das zweite Ende (55b) der ersten Feder (55) auf dem ersten Ende (56a) der zweiten Feder (56) zum Liegen kommt, so dass die erste und die zweite Feder (55, 56) in Reihe zu Liegen kommen, wenn sich das Abdeckungsmittel (45) weiter öffnet, zieht das Zugmittel (60) das zweite Ende (55b) der ersten Feder (55) in zunehmendem Maße, so dass die erste Feder (55) beginnt, die zweite Feder (56) zu komprimieren, wodurch diese verformt wird.

2. Handschuhfach (100) nach Anspruch 1, **dadurch gekennzeichnet, dass** die erste Feder (55) länger als die zweite Feder (56) ist und Windungen aufweist, die einen größeren Durchmesser als die Windungen der zweiten Feder (56) aufweisen.

3. Handschuhfach (100) nach einem der vorhergehenden Ansprüche, **dadurch gekennzeichnet, dass** mindestens ein Abschnitt des elastischen Energiespeichermittels (50) in einem Sitz (37) aufgenommen ist, der auf einer Fläche (11) des Behälters (10) ausgebildet ist.

4. Handschuhfach (100) nach einem der vorhergehenden Ansprüche, **dadurch gekennzeichnet, dass** sich innerhalb des Behälters (10) eine Schale (20) befindet, die mittels des Scharniermittels (30) an den Behälter (10) gelenkig gelagert ist; wobei die Schale (20) das Abdeckungsmittel (45) umfasst.

**Revendications**

1. Boîte à gants (100) pour un tableau de bord d'un véhicule à moteur ; la boîte à gants (100) comprenant :

un contenant (10) pouvant être monté sur le tableau de bord du véhicule à moteur ; ledit contenant (10) étant pourvu d'une ouverture (17) pour charger/décharger les objets ;
un moyen couvrant (45) de ladite ouverture (17) ; ledit moyen couvrant (45) étant articulé sur ledit contenant (10) par un moyen formant charnière (30) ; et
un moyen d'accumulation d'énergie élastique (50 ; 550) couplé mécaniquement audit moyen couvrant (45) ;
ledit moyen d'accumulation d'énergie élastique (50) étant élastiquement chargé en raison du déplacement dudit moyen couvrant (45) lors de l'ouverture de ladite ouverture (17) ;
ledit moyen d'accumulation d'énergie élastique (50) comprenant un ensemble élastique (51) ayant un module d'élasticité de Young variable en fonction de la déformation dudit ensemble élastique (51) ; ledit ensemble élastique (51) comprenant un premier ressort (55) et un second ressort (56) ; ledit premier ressort (55) comprenant une première extrémité (55A) fixée à une paroi et une seconde extrémité (55B) à laquelle est fixée une première extrémité (60A) d'un moyen de traction (60) ; une première partie (60*) dudit moyen de traction (60) s'étendant au moins partiellement librement dans ledit second ressort (56) ; une seconde extrémité (60B) dudit moyen de traction (60) étant fixée audit moyen couvrant (45) ; ledit second ressort (56) comprenant une première extrémité libre (56A) et une seconde extrémité 56B) reposant sur un élément de butée (57) ;
**caractérisé en ce que**, lorsqu'un utilisateur ouvre la boîte à gants (100) en faisant tourner le moyen couvrant (45) autour du moyen formant charnière (30), ledit premier ressort (55) est allongé par ledit moyen de traction (60) et la seconde extrémité (55b) dudit premier ressort (55) vient reposer sur la première extrémité (56a) dudit second ressort (56), de telle sorte que les premier et second ressorts (55, 56) deviennent en série ; quand le moyen couvrant (45) s'ouvre davantage, le moyen de traction (60) tire de plus en plus la seconde extrémité (55b) dudit premier ressort (55), de telle sorte que ledit premier ressort (55) commence à comprimer ledit second ressort (56), le déformant ainsi.

2. Boîte à gants (100) selon la revendication 1, **caractérisée en ce que** ledit premier ressort (55) est plus long que ledit second ressort (56) et comporte des enroulements ayant un diamètre plus grand que les enroulements dudit second ressort (56).

3. Boîte à gants (100) selon l'une quelconque des revendications précédentes, **caractérisée en ce qu'**au moins une partie dudit moyen d'accumulation d'énergie élastique (50) est contenue dans un logement (37) formé sur une face (11) dudit contenant (10).

4. Boîte à gants (100) selon l'une quelconque des revendications précédentes, **caractérisée en ce qu'**à l'intérieur dudit contenant (10) se trouve une coque (20) articulée sur ledit contenant (10) à l'aide dudit moyen formant charnière (30) ; ladite coque (20) comprenant ledit moyen couvrant (45).

## FIG. 1

# FIG. 2

# FIG. 3

EP 3 388 288 B1

## FIG. 4

## FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001193779 A